# DEMANDE DE BREVET EUROPEEN

(11) **EP 4 462 036 A1**
(43) Date de publication de la demande: **13.11.2024**
(21) Numéro de dépôt: 24174665.0
(22) Date de dépôt: 07.05.2024
(51) Int. Cl.: F24S 25/12, F24S 25/13, E04B 1/19, H02S 20/10

(54) **STRUCTURE FIXE PORTEUSE POUR PANNEAUX SOLAIRES**

(30) Priorité: 09.05.2023 FR 2304577
(71) Demandeur: Nexans, 92400 Courbevoie (FR)
(72) Inventeur: QUEVILLIER, Ludovic, 13400 AUBAGNE (FR); SOULIE, Emile, 12490 VIALA-DU-TARN (FR); FRANCONE, Justine, 84120 PERTUIS (FR)
(74) Mandataire: Ipsilon

(57) **Abrégé**

L'invention concerne une structure fixe porteuse pour panneaux solaires comportant :
- une structure métallique permettant de supporter les panneaux solaires, la structure métallique s'étendant longitudinalement selon une direction principale d'extension, et
- deux structures métalliques fixes d'ancrage au sol permettant de supporter la structure métallique, chaque structure métallique fixe d'ancrage au sol comportant un pied, un premier et un deuxième bracons formant un V et un troisième et un quatrième bracons formant un V.

## Description

### Domaine technique

La présente invention concerne une structure fixe porteuse pour panneaux solaires, un procédé d'installation de ladite structure fixe porteuse, une structure fixe solaire comportant ladite structure fixe porteuse, et un champ solaire comportant ladite structure fixe solaire.

### Arrière-plan technologique

Les structures porteuses fixes pour panneaux solaires, contrairement aux structures porteuses mobiles (également appelées suiveurs solaires), ne permettent pas le changement d'inclinaison des panneaux solaires en fonction de la variation de l'ensoleillement au cours de la journée.

Ainsi, lorsque des panneaux solaires sont installés sur des structures porteuses fixes, l'inclinaison des panneaux solaires est fixe, c'est-à-dire qu'elle ne varie pas en fonction de l'ensoleillement au cours de la journée.

Cependant, en fonction de la zone géographique dans laquelle les panneaux solaires sont installés, leur inclinaison peut varier. Elle peut aller généralement de 0° lorsque les panneaux solaires sont installés au niveau de l'équateur à environ 35° vers le sud ou le nord.

Bien que le rendement des panneaux solaires installés sur des structures porteuses fixes soit généralement inférieur à celui des panneaux solaires installés sur des suiveurs solaires, les structures porteuses fixes présentent tout de même un intérêt car elles ne comportent pas d'élément motorisé ni d'élément mobile permettant de faire varier l'inclinaison des panneaux solaires en fonction de l'ensoleillement au cours de la journée. Ainsi, les structures porteuses fixes présentent un coût de fabrication plus faible et nécessitent moins de maintenance par rapport aux suiveurs solaires.

Par ailleurs, dans certains cas, en particulier lorsque l'on s'éloigne de l'équateur et que les panneaux solaires installés sur des structures porteuses fixes sont inclinés vers le sud ou le nord, leur rendement peut être équivalent voire supérieur à celui des panneaux solaires installés sur des suiveurs solaires 1 axe (i.e. suiveurs solaires alignés selon la direction Nord/Sud et mobile en rotation autour d'un axe Est/Ouest). Cela s'explique par le fait que l'inclinaison vers le sud ou le nord des panneaux solaires installés sur des structures porteuses fixes peut permettre de compenser voire surpasser le gain lié au suivi Est/Ouest des suiveurs solaires 1 axe. Ainsi, dans ces cas, les structures porteuses fixes présentent un réel intérêt par rapport aux suiveurs solaires 1 axe.

Les structures porteuses fixes pour panneaux solaires actuelles comportent un nombre élevé de structures d'ancrage au sol, telles que des pieux ou des blocs de béton, généralement réparties tous les 1 à 5 mètres.

Cela entraîne une augmentation du coût de fabrication de ces structures porteuses fixes.

En outre, cela complexifie leur installation. En effet, il est nécessaire que les structures d'ancrage au sol d'une structure porteuse fixe soient alignées, et en fonction du type de sol, l'installation des structures d'ancrage dans le sol est une opération relativement longue et complexe, qui peut en outre engendrer des pollutions ou détériorations des sols.

Un but de la présente invention est d'améliorer les structures porteuses fixes pour panneaux solaires existantes, et notamment de réduire leur coût de fabrication et de simplifier leur installation sans affecter leur stabilité et leur robustesse.

### Résumé de l'invention

Structure fixe porteuse pour panneaux solaires

A cette fin, la présente invention a pour objet une structure fixe porteuse pour panneaux solaires, notamment thermiques et/ou photovoltaïques, comportant :
- une structure métallique permettant de supporter les panneaux solaires, la structure métallique s'étendant longitudinalement selon une direction principale d'extension, la structure métallique comportant :
   ∘ un longeron inférieur et un longeron supérieur parallèles entre eux et s'étendant selon la direction principale d'extension, et
   ∘ une ou plusieurs traverses reliant entre eux les longerons inférieur et supérieur ;
- deux structures métalliques fixes d'ancrage au sol permettant de supporter la structure métallique, chaque structure métallique fixe d'ancrage au sol comportant :
   ∘ un pied présentant une première extrémité fixée, notamment directement ou indirectement, au longeron inférieur et une deuxième extrémité destinée à être fixée ou fixée, notamment directement ou indirectement, au sol,
   ∘ un premier et un deuxième bracons formant un V, chacun des premier et deuxième bracons comportant une extrémité supérieure fixée au longeron supérieur et une extrémité inférieure formant la pointe du V, et
   ∘ un troisième et un quatrième bracons formant un V, chacun des troisième et quatrième bracons comportant une extrémité supérieure fixée au longeron inférieur et une extrémité inférieure formant la pointe du V, la pointe du V formée par les extrémités inférieures des premier et deuxième bracons et la pointe du V formée par les extrémités inférieures des troisième et quatrième bracons étant reliées entre elles pour former une pieuvre.

La structure fixe porteuse pour panneaux solaires selon l'invention est particulièrement avantageuse dans la mesure où elle permet de minimiser le nombre de structures d'ancrage au sol. Cela est rendu possible grâce à la structure métallique qui est suffisamment résistante mécaniquement. Ainsi, la structure fixe porteuse pour panneaux solaires selon l'invention peut par exemple comporter uniquement deux structures d'ancrage au sol pour supporter la structure métallique.

Par rapport aux structures porteuses fixes pour panneaux solaires actuelles, la structure fixe porteuse pour panneaux solaires selon l'invention comporte, à longueur égale, 2,5 à 4 fois moins de structures d'ancrage au sol.

De par son nombre réduit de structures d'ancrage au sol, la structure fixe porteuse pour panneaux solaires selon l'invention peut présenter un coût réduit de fabrication, d'assemblage et d'installation.

Son montage et son installation est par ailleurs plus simple et plus rapide, et entraine moins de pollution et détérioration du sol.

De par son nombre réduit de structures d'ancrage au sol, la structure fixe porteuse pour panneaux solaires selon l'invention présente par ailleurs l'avantage de pouvoir être installée sur des terrains dont la géométrie est complexe, tout en évitant les problématiques d'alignement des structures d'ancrage au sol rencontrées dans le cas des structures fixes porteuses comportant un nombre élevé de structures d'ancrage au sol.

La structure fixe porteuse selon l'invention peut avantageusement présenter un poids réduit.

La structure fixe porteuse selon l'invention présente également l'avantage de minimiser l'ombrage sur la face arrière des panneaux solaires et donc d'augmenter le rendement global des panneaux solaires en augmentant le rendement sur la face arrière des panneaux solaires. Cela est rendu possible par le fait que la structure fixe porteuse selon l'invention comporte un nombre réduit d'éléments sur la face arrière des panneaux solaires.

La direction principale d'extension correspond de préférence à la direction Est/Ouest.

La structure fixe porteuse, en particulier la structure métallique, peut être configurée pour supporter deux ou trois rangées de panneaux solaires verticaux (configurations également appelées « 2V » ou « 3V » respectivement).

En variante, la structure fixe porteuse, en particulier la structure métallique, est configurée pour supporter quatre, cinq ou six rangées de panneaux solaires horizontaux (configurations également appelées « 4H », « 5H » ou « 6H »).

Par « longeron supérieur » et « longeron inférieur », on entend que le longeron supérieur est situé à une hauteur par rapport au sol qui est supérieure à celle du longeron inférieur.

La structure fixe porteuse peut comporter uniquement deux structures métalliques fixes d'ancrage au sol.

La structure métallique peut comporter uniquement deux longerons, à savoir le longeron inférieur et le longeron supérieur.

Les deux structures métalliques fixes d'ancrage au sol sont de préférence réparties le long de la direction principale d'extension.

Le pied et la pieuvre de chaque structure métallique fixe d'ancrage au sol s'inscrivent de préférence dans un plan perpendiculaire à la direction principale d'extension, dit plan médian de la structure métallique fixe d'ancrage au sol.

La deuxième extrémité du pied et la pieuvre de chaque structure métallique fixe d'ancrage au sol peuvent être fixées directement au sol.

En variante, la deuxième extrémité du pied et la pieuvre de chaque structure métallique fixe d'ancrage au sol est fixée indirectement au sol.

Dans un premier mode de réalisation de cette variante, la deuxième extrémité du pied et la pieuvre de chaque structure métallique fixe d'ancrage au sol sont fixés sur un bloc de béton, de préférence installé au sol.

Dans un deuxième mode de réalisation de cette variante, la deuxième extrémité du pied et la pieuvre de chaque structure métallique fixe d'ancrage au sol sont chacune fixée sur un pieu, de préférence installé dans le sol.

Le pieu peut être foré, battu ou de tout autre type.

Le pieu peut être un profilé métallique de construction, notamment de type IPN ou HEA, ou peut être un profilé métallique ouvert, notamment de type C, Oméga, Wou UPAF.

Le pied de chaque structure métallique fixe d'ancrage au sol peut être un tube métallique, notamment de section carrée, ou peuvent être chacun un profilé métallique ouvert, notamment de type C, Oméga, W ou UPAF.

Les premier et deuxième bracons sont de préférence symétriques par rapport au plan médian de la structure métallique fixe d'ancrage au sol.

Les troisième et quatrième bracons sont de préférence symétriques par rapport au plan médian de la structure métallique fixe d'ancrage au sol

Chaque structure métallique fixe d'ancrage au sol peut comporter une traverse reliant entre eux les longerons inférieur et supérieur, cette traverse s'étendant dans le plan médian de chaque structure métallique fixe d'ancrage au sol.

Chaque structure métallique fixe d'ancrage au sol peut comporter un cinquième bracon reliant le longeron supérieur à la pieuvre, ce cinquième bracon s'étendant dans le plan médian de chaque structure métallique fixe d'ancrage au sol.

Chaque structure métallique fixe d'ancrage au sol peut comporter un sixième bracon reliant le longeron inférieur à la pieuvre, ce sixième bracon s'étendant dans le plan médian de chaque structure métallique fixe d'ancrage au sol.

La structure métallique peut comporter une, deux, trois, quatre, cinq, six ou sept traverses reliant entre eux les longerons inférieur et supérieur.

La ou les traverses reliant entre eux les longerons inférieur et supérieur s'étendent de préférence selon une direction qui est perpendiculaire à la direction principale d'extension.

Lorsque la structure métallique comporte plusieurs traverses reliant entre eux les longerons inférieur et supérieur, notamment deux, trois, quatre, cinq, six ou sept traverses, ces dernières sont de préférence parallèles entre elles.

De préférence, la structure métallique comporte une traverse reliant les extrémités supérieures des premier et troisième bracons de chaque structure métallique fixe d'ancrage au sol.

De préférence, la structure métallique comporte une traverse reliant les extrémités supérieures des deuxième et quatrième bracons de chaque structure métallique fixe d'ancrage au sol.

De préférence, la structure métallique comporte une traverse s'étendant dans un plan médian de la structure métallique.

La structure métallique peut présenter une longueur allant de 10 à 30 mètres, préférentiellement de 10 à 27 mètres, plus préférentiellement de 10 à 18 mètres, et plus préférentiellement encore de 12 à 16 mètres.

La distance entre les deux structures métalliques fixes d'ancrage au sol, notamment la distance entre les pieds des deux structures métalliques fixes d'ancrage au sol, est de préférence comprise entre 40% et 60%, de préférence entre 45% et 55%, de la longueur de la structure métallique.

La distance entre les deux structures métalliques fixes d'ancrage au sol, notamment la distance entre les pieds des deux structures métalliques fixes d'ancrage au sol, peut aller de 4 à 18 mètres, préférentiellement de 4 à 16 mètres, plus préférentiellement de 4 à 11 mètres, et plus préférentiellement encore de 5 à 10 mètres.

Cela est particulièrement avantageux en comparaison des structures fixes porteuses existantes qui comportent des structures d'ancrage au sol espacées d'une distance comprise entre 1 et 5 mètres.

La structure métallique peut comporter des rails s'étendant entre les longerons inférieur et supérieur et dépassant de part et d'autre des longerons inférieur et supérieur, ces rails permettant de supporter les panneaux solaires.

Ces rails s'étendent de préférence selon une direction perpendiculaire à la direction principale d'extension.

Ces rails peuvent présenter une longueur allant de 2 à 8 mètres.

Ces rails peuvent être configurés pour permettre de supporter deux ou trois rangées de panneaux solaires verticaux (configurations « 2V » ou « 3V » respectivement). Par exemple, les rails peuvent présenter une longueur allant de 2,5 à 5,5 mètres dans le cas d'une configuration « 2V » ou une longueur allant de 4,5 à 6 mètres dans le cas d'une configuration « 3V ».

En variante, ces rails sont configurés pour permettre de supporter quatre, cinq ou six rangées de panneaux solaires horizontaux (configurations « 4H », « 5H » ou « 6H » respectivement). Par exemple, les rails peuvent présenter une longueur allant de 3,5 à 5 mètres dans le cas d'une configuration « 4H », une longueur allant de 4,5 à 6,5 mètres dans le cas d'une configuration « 5H » ou une longueur allant de 5,5 à 8 mètres dans le cas d'une configuration « 6H ».

La structure métallique peut comporter un rail s'étendant dans le plan médian de chaque structure métallique fixe d'ancrage au sol.

De préférence, la structure métallique comporte un rail reliant les extrémités supérieures des premier et troisième bracons de chaque structure métallique fixe d'ancrage au sol.

De préférence, la structure métallique comporte un rail reliant les extrémités supérieures des deuxième et quatrième bracons de chaque structure métallique fixe d'ancrage au sol.

De préférence, la structure métallique comporte un rail s'étendant dans le plan médian de la structure métallique.

La structure métallique peut comporter un ou plusieurs contreventements reliant les longerons inférieur et supérieur, notamment un, deux, trois, quatre, cinq ou six contreventements, de préférence quatre contreventements, ces contreventements s'étendant dans une direction qui n'est pas perpendiculaire à la direction principale d'extension.

La structure métallique peut comporter un contreventement reliant le longeron supérieur à l'extrémité supérieure du troisième bracon de chaque structure métallique fixe d'ancrage au sol et/ou un contreventement reliant le longeron supérieur à l'extrémité supérieure du quatrième bracon de chaque structure métallique fixe d'ancrage au sol.

En variante, la structure métallique comporte un contreventement reliant le longeron inférieur à l'extrémité supérieure du premier bracon de chaque structure métallique fixe d'ancrage au sol et/ou un contreventement reliant le longeron inférieur à l'extrémité supérieure du deuxième bracon de chaque structure métallique fixe d'ancrage au sol.

La structure métallique et les deux structures métalliques fixes d'ancrage au sol sont de préférence réalisées en acier, notamment en acier S235 ou S350GD.

De préférence, les points de fixation au sol du pied et de la pieuvre sont à distance l'un de l'autre.

Procédé d'installation d'une structure fixe porteuse pour panneaux solaires

La présente invention a encore pour objet un procédé d'installation d'une structure fixe porteuse telle que définie plus haut, le procédé comportant les étapes consistant à :
a) assembler la structure fixe porteuse dans une zone atelier ou directement dans une zone finale d'installation ;
b) déplacer la structure fixe porteuse ainsi assemblée de la zone atelier vers la zone finale d'installation dans le cas où l'étape a) est réalisée dans la zone atelier ;
c) monter la structure fixe porteuse sur des pieux ou des blocs en béton préalablement installés dans le sol dans la zone finale d'installation.

Par « zone finale d'installation », on entend une zone située sur le chantier, et correspondant à la zone dans laquelle sera installée in fine la structure fixe porteuse.

Par « zone atelier », on entend une zone située également sur le chantier mais à distance de la zone finale d'installation, et spécialement aménagée pour permettre l'assemblage de la structure fixe porteuse.

Il est particulièrement avantageux de pouvoir réaliser l'étape a) dans la zone atelier car cela peut permettre un assemblage de la structure fixe porteuse dans des conditions optimales, notamment d'un point de vue de la qualité et de la sécurité.

Cependant, dans certains cas, l'étape a) est réalisée directement dans la zone finale d'installation, notamment lorsque la topographie du chantier est complexe.

L'étape b) est rendu possible du fait que la structure fixe porteuse est suffisamment résistante mécaniquement et qu'elle présente un poids réduit.

Lors de l'étape a), la structure fixe porteuse peut être assemblée en un seul tronçon.

En variante, elle est assemblée en au moins deux tronçons. Dans cette variante, le procédé peut comporter, avant l'étape c), une étape de raccordement des tronçons les uns aux autres, de préférence réalisée dans la zone finale d'installation, de manière à former la structure fixe porteuse en un seul tronçon.

Le choix d'un assemblage en un seul tronçon ou en au moins deux tronçons peut se faire par exemple en fonction de la longueur finale de la structure fixe porteuse et/ou de la topographie de la zone finale d'installation.

L'étape c) peut comporter une étape c₁) dans laquelle le montage de la structure fixe porteuse sur les pieux ou les blocs en béton installés dans le sol est effectuée sans serrage. Cela peut permettre une mobilité de la structure fixe porteuse par rapport aux pieux ou blocs en béton, et donc à la structure fixe porteuse d'épouser l'éventuelle pente de la zone finale d'installation.

L'étape c) peut comporter une étape c₂), consécutive à l'étape c₁), dans laquelle on finalise le montage de la structure fixe porteuse sur les pieux ou les blocs en béton installés dans le sol en effectuant un serrage.

Le procédé peut comporter une étape d) consistant à monter des panneaux solaires, notamment thermiques et/ou photovoltaïques, sur la structure métallique.

L'étape c) est de préférence réalisée après l'étape a) ou après l'étape b).

L'étape d) est de préférence réalisée après l'étape c).

### Structure fixe solaire

La présente invention a encore pour objet une structure fixe solaire comportant :
- une structure fixe porteuse telle que définie plus haut, et
- des panneaux solaires supportés par la structure métallique de la structure fixe porteuse.

Les panneaux solaires peuvent être des panneaux solaires thermiques et/ou photovoltaïques, de préférence des panneaux solaires photovoltaïques.

La structure fixe solaire peut comporter deux ou trois rangées de panneaux solaires verticaux (configurations « 2V » ou « 3V » respectivement) supportés par la structure métallique de la structure fixe porteuse.

En variante, la structure fixe solaire comporte quatre, cinq ou six rangées de panneaux solaires horizontaux (configurations « 4H », « 5H » ou « 6H » respectivement) supportés par la structure métallique de la structure fixe porteuse.

La garde au sol peut aller jusqu'à 4 mètres, et est notamment comprise entre 40 centimètres et 4 mètres. Cela est rendu possible par le fait que les structures métalliques fixes d'ancrage au sol de la structure fixe porteuse présentent une importante résistante mécanique.

Une garde au sol pouvant aller jusqu'à 4 mètres est particulièrement avantageuse en termes d'applications. En effet, cela peut par exemple permettre d'installer la structure fixe solaire selon l'invention au-dessus d'aires de stationnement (i.e. ombrières de parking), au-dessus de routes, au-dessus d'élevages ou de cultures (i.e. agrivoltaïsme), ou encore au-dessus de canaux (i.e. canaux photovoltaïques).

Par « garde au sol », on entend la distance entre le point bas des panneaux solaires et le sol.

### Champ solaire

La présente invention a encore pour objet un champ solaire comportant une pluralité de structures fixes solaires telles que définies plus haut.

Au moins certaines structures fixes solaires peuvent être disposés parallèlement les unes aux autres, notamment selon la direction Est/Ouest.

### Brève description des figures

L'invention pourra être mieux comprise à la lecture de la description détaillée qui va suivre, d'un exemple de mise en oeuvre non limitatif de celle-ci, et à l'examen du dessin annexé, sur lequel :
La figure 1 représente, de façon schématique et en perspective, un exemple de structure fixe porteuse pour panneaux solaires selon l'invention,
La figure 2 représente un détail de la figure 1,
La figure 3 représente une autre vue de l'exemple de structure fixe porteuse pour panneaux solaires selon l'invention illustré à la figure 1, et
La figure 4 représente un détail de la figure 3.

### Description de mode(s) de réalisation

Dans les figures, et à moins qu'il n'en soit disposé autrement, les éléments identiques porteront les mêmes signes de référence.

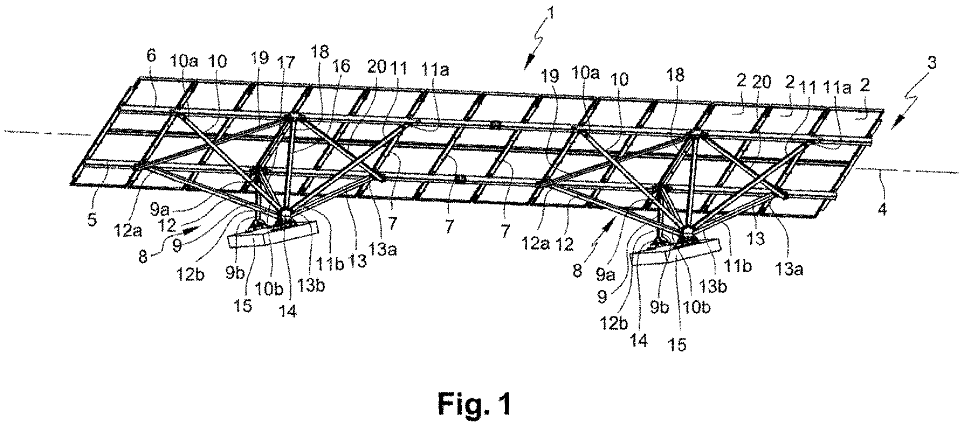

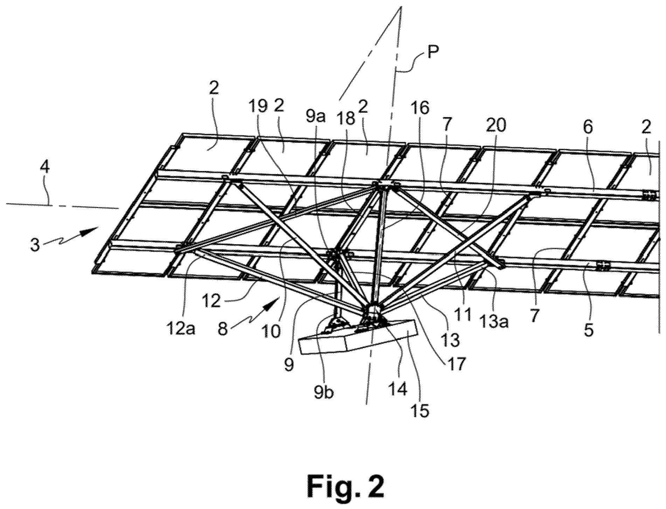

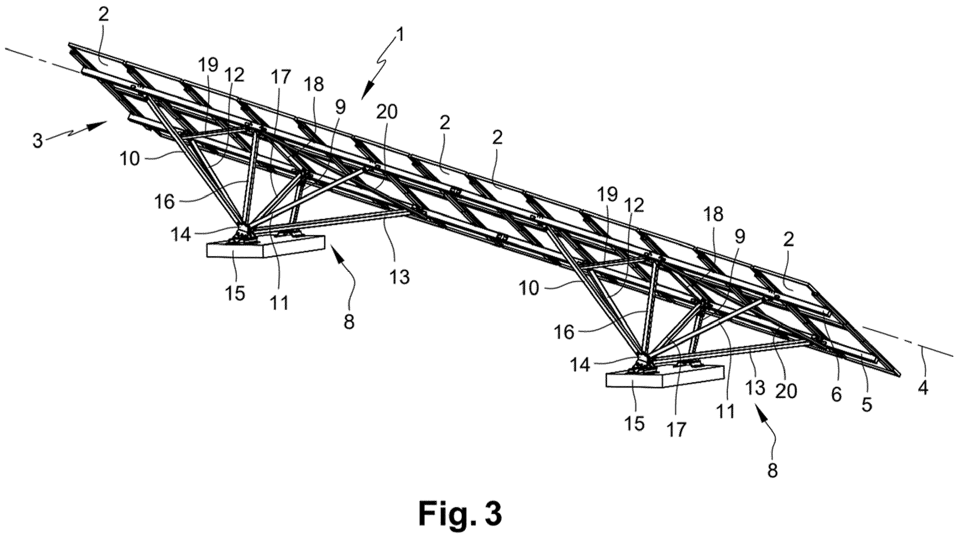

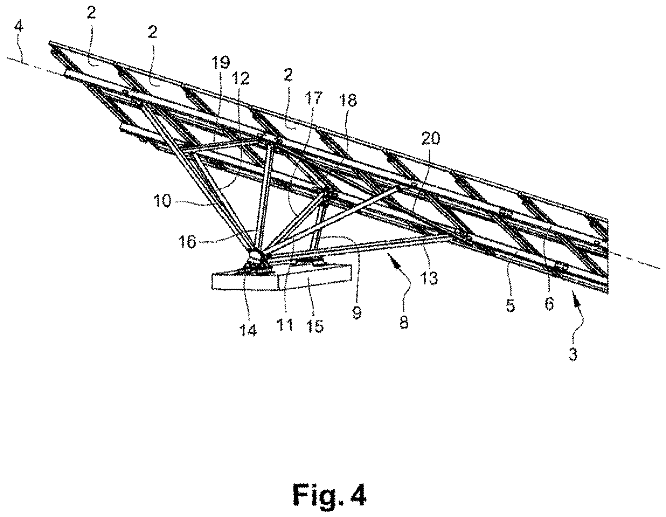

On a illustré aux figures 1 à 4 un exemple de structure fixe porteuse 1 pour panneaux solaires 2 comportant :
- une structure métallique 3 permettant de supporter les panneaux solaires 2, la structure métallique 3 s'étendant longitudinalement selon une direction principale d'extension 4, la structure métallique 3 comportant :
   ∘ un longeron inférieur 5 et un longeron supérieur 6 parallèles entre eux et s'étendant selon la direction principale d'extension 4, et
   ∘ plusieurs traverses 7 reliant entre eux les longerons inférieur 5 et supérieur 6 ;
- deux structures métalliques fixes d'ancrage au sol 8 permettant de supporter la structure métallique 3, chaque structure métallique fixe d'ancrage au sol 8 comportant :
   ∘ un pied 9 présentant une première extrémité 9a fixée au longeron inférieur 5 et une deuxième extrémité 9b destinée à être fixée ou fixée au sol,
   ∘ un premier 10 et un deuxième 11 bracons formant un V, chacun des premier 10 et deuxième 11 bracons comportant une extrémité supérieure 10a, 11a fixée au longeron supérieur 6 et une extrémité inférieure 10b, 11c formant la pointe du V, et
   ∘ un troisième 12 et un quatrième 13 bracons formant un V, chacun des troisième 12 et quatrième 13 bracons comportant une extrémité supérieure 12a, 13a fixée au longeron inférieur 5 et une extrémité inférieure 12b, 13b formant la pointe du V, la pointe du V formée par les extrémités inférieures 10b, 11b des premier 10 et deuxième 11 bracons et la pointe du V formée par les extrémités inférieures 12b, 13b des troisième 12 et quatrième 13 bracons étant reliées entre elles pour former une pieuvre 14.

Comme illustré aux figures 1 à 4, la deuxième extrémité 9b du pied 9 et la pieuvre 14 de chaque structure métallique fixe d'ancrage au sol 8 sont fixés sur un bloc de béton 15.

Chaque structure métallique fixe d'ancrage au sol 8 comporte un cinquième bracon 16 reliant le longeron supérieur 6 à la pieuvre 14, ce cinquième bracon 16 s'étendant dans le plan médian P de chaque structure métallique fixe d'ancrage au sol 8.

Chaque structure métallique fixe d'ancrage au sol 8 comporte un sixième bracon 17 reliant le longeron inférieur 5 à la pieuvre 14, ce sixième bracon 17 s'étendant dans le plan médian P de chaque structure métallique fixe d'ancrage au sol 8.

Chaque structure métallique fixe d'ancrage au sol 8 comporte une traverse 18 reliant entre eux les longerons inférieur 5 et supérieur 6, cette traverse 18 s'étendant dans le plan médian P de chaque structure métallique fixe d'ancrage au sol 8.

La structure métallique 3 comporte un contreventement 19 s'étendant dans une direction qui n'est pas perpendiculaire à la direction principale d'extension 4 et reliant le longeron supérieur 6 à l'extrémité supérieure 12a du troisième bracon 12 de chaque structure métallique fixe d'ancrage au sol 8

La structure métallique 3 comporte un contreventement 20 s'étendant dans une direction qui n'est pas perpendiculaire à la direction principale d'extension 4 et reliant le longeron supérieur 6 à l'extrémité supérieure 13a du quatrième bracon 13 de chaque structure métallique fixe d'ancrage au sol 8.

## Revendications

1. Structure fixe porteuse (1) pour panneaux solaires (2) comportant :
- une structure métallique (3) permettant de supporter les panneaux solaires (2), la structure métallique (2) s'étendant longitudinalement selon une direction principale d'extension (4), la structure métallique (2) comportant :
- un longeron inférieur (5) et un longeron supérieur (6) parallèles entre eux et s'étendant selon la direction principale d'extension (4), et
- une ou plusieurs traverses (7) reliant entre eux les longerons inférieur (5) et supérieur (6) ;
- deux structures métalliques fixes d'ancrage au sol (8) permettant de supporter la structure métallique (3), chaque structure métallique fixe d'ancrage au sol (8) comportant :
- un pied (9) présentant une première extrémité (9a) fixée au longeron inférieur (5) et une deuxième extrémité (9b ) destinée à être fixée ou fixée au sol,
- un premier (10) et un deuxième (11) bracons formant un V, chacun des premier (10) et deuxième (11) bracons comportant une extrémité supérieure (10a, 11a) fixée au longeron supérieur (6) et une extrémité inférieure (10b, 11b) formant la pointe du V, et
- un troisième (12) et un quatrième (13) bracons formant un V, chacun des troisième (12) et quatrième (13) bracons comportant une extrémité supérieure (12a, 13a) fixée au longeron inférieur (5) et une extrémité inférieure (12b, 13b) formant la pointe du V, la pointe du V formée par les extrémités inférieures (10b, 11b) des premier (10) et deuxième (11) bracons et la pointe du V formée par les extrémités inférieures (12b, 13b) des troisième (12) et quatrième (13) bracons étant reliées entre elles pour former une pieuvre (14).

2. Structure selon la revendication 1, les deux structures métalliques fixes d'ancrage au sol (8) étant réparties le long de la direction principale d'extension (4).

3. Structure selon la revendication 1 ou 2, le pied (9) et la pieuvre (14) de chaque structure métallique fixe d'ancrage au sol (8) s'inscrivant dans un plan (P) perpendiculaire à la direction principale d'extension, dit plan médian (P) de la structure métallique fixe d'ancrage au sol (8).

4. Structure selon la revendication 3, chaque structure métallique fixe d'ancrage au sol (8) comportant une traverse (18) reliant entre eux les longerons inférieur (5) et supérieur (6), cette traverse (18) s'étendant dans le plan médian (P) de chaque structure métallique fixe d'ancrage au sol (8).

5. Structure selon la revendication 3 ou 4, chaque structure métallique fixe d'ancrage au sol (8) comportant un cinquième bracon (16) reliant le longeron supérieur (6) à la pieuvre (14), ce cinquième bracon (16) s'étendant dans le plan médian (P) de chaque structure métallique fixe d'ancrage au sol (8).

6. Structure selon l'une quelconque des revendications 3 à 5, chaque structure métallique fixe d'ancrage au sol (8) comportant un sixième bracon (17) reliant le longeron inférieur (5) à la pieuvre (14), ce sixième bracon (17) s'étendant dans le plan médian (P) de chaque structure métallique fixe d'ancrage au sol (8).

7. Structure selon l'une quelconque des revendications précédentes, la structure métallique (3) comportant un ou plusieurs contreventements (19, 20) reliant les longerons inférieur (5) et supérieur (6), ces contreventements (19, 20) s'étendant dans une direction qui n'est pas perpendiculaire à la direction principale d'extension 4.

8. Structure selon la revendication 7, la structure métallique (3) comportant un contreventement (19) reliant le longeron supérieur (6) à l'extrémité supérieure (12a) du troisième bracon (12) de chaque structure métallique fixe d'ancrage au sol et/ou un contreventement (20) reliant le longeron supérieur (6) à l'extrémité supérieure (13a) du quatrième bracon (13) de chaque structure métallique fixe d'ancrage au sol (8).

9. Structure selon la revendication 7, la structure métallique (3) comportant un contreventement reliant le longeron inférieur (5) à l'extrémité supérieure (10a) du premier bracon (10) de chaque structure métallique fixe d'ancrage au sol et/ou un contreventement reliant le longeron inférieur (5) à l'extrémité supérieure (11a) du deuxième bracon (11) de chaque structure métallique fixe d'ancrage au sol (8).

10. Structure selon l'une quelconque des revendications précédentes, la structure métallique (3) présentant une longueur allant de 10 à 30 mètres, préférentiellement de 10 à 27 mètres, plus préférentiellement de 10 à 18 mètres, et plus préférentiellement encore de 12 à 16 mètres.

11. Structure selon l'une quelconque des revendications précédentes, la distance entre les deux structures métalliques fixes d'ancrage au sol (8), notamment la distance entre les pieds (9) des deux structures métalliques fixes d'ancrage au sol (8), allant de 4 à 18 mètres, préférentiellement de 4 à 16 mètres, plus préférentiellement de 4 à 11 mètres, et plus préférentiellement encore de 5 à 10 mètres.

12. Structure selon l'une quelconque des revendications précédentes, la structure métallique (3) comportant des rails s'étendant entre les longerons inférieur (5) et supérieur (6) et dépassant de part et d'autre des longerons inférieur (5) et supérieur (6), ces rails permettant de supporter les panneaux solaires (2).

13. Structure selon l'une quelconque des revendications précédentes, la ou les traverses (7) reliant entre eux les longerons inférieur (5) et supérieur (6) s'étendant selon une direction perpendiculaire à la direction principale d'extension (4).

14. Procédé d'installation d'une structure fixe porteuse (1) selon l'une quelconque des revendications précédentes, le procédé comportant les étapes consistant à :
a) assembler la structure fixe porteuse (1) dans une zone atelier ou directement dans une zone finale d'installation;
b) déplacer la structure fixe porteuse (1) ainsi assemblée de la zone atelier vers la zone finale d'installation dans le cas où l'étape a) est réalisée dans la zone atelier ;
c) monter la structure fixe porteuse (1) sur des pieux ou des blocs en béton (15) préalablement installés dans le sol dans la zone finale d'installation.

15. Structure fixe solaire comportant :
- une structure fixe porteuse (1) selon l'une quelconque des revendications 1 à 13, et
- des panneaux solaires (2) supportés par la structure métallique (3) de la structure fixe porteuse (1).

16. Structure fixe solaire selon la revendication 15, les panneaux solaires (2) étant des panneaux solaires thermiques et/ou photovoltaïques, de préférence des panneaux solaires photovoltaïques.

17. Champ solaire comportant une pluralité de structures fixes solaires selon la revendication 15 ou 16, au moins certaines structures fixes solaires étant notamment disposés parallèlement les unes aux autres, notamment selon la direction Est/Ouest.
